# EUROPÄISCHE PATENTSCHRIFT

(11) **EP 1 301 367 B1**
(45) Veröffentlichungstag und Bekanntmachung des Hinweises auf die Patenterteilung: **21.07.2004**
(21) Anmeldenummer: 01936145.0
(22) Anmeldetag: 27.03.2001
(51) Int. Cl.: B60K 15/077, F02M 37/10

(54) **KRAFTSTOFFÖRDEREINHEIT**
FUEL DELIVERY UNIT
UNITE D'ALIMENTATION EN CARBURANT

(30) Priorität: 03.06.2000 DE 10027650
(43) Veröffentlichungstag der Anmeldung: 16.04.2003
(73) Patentinhaber: SIEMENS AKTIENGESELLSCHAFT, 80333 München (DE)
(72) Erfinder: ECK, Karl, 60318 Frankfurt (DE)
(86) Internationale Anmeldenummer: PCT/EP2001/003471
(87) Internationale Veröffentlichungsnummer: WO 2001/094144

(56) Entgegenhaltungen:
- DE-A- 4 111 341
- DE-A- 19 518 755
- US-A- 4 860 714

## Beschreibung

Die Erfindung betrifft eine Kraftstoffördereinheit für ein Kraftfahrzeug gemäß den Oberbegiff des Anspruchs 1. In der vormontierten Variante ist sie aus der DE-A-19 518 755 bekannt geworden, in der einteiligen Variante aus der US-A-4 860 714.

Solche Kraftstoffördereinheiten werden in heutigen Kraftfahrzeugen häufig eingesetzt und sind damit bekannt. Der Kraftstoffilter ist in der Regel tütenförmig gestaltet und an einem Ansaugstutzen der Kraftstoffpumpe befestigt. Die Kraftstoffpumpe wird von dem Halter zusammen mit dem Kraftstoffilter gegen den Bodenbereich des Schwalltopfes vorgespannt. Eine von der Fördereinheit zu einer Brennkraftmaschine des Kraftfahrzeuges führende Vorlaufleitung hat einen Abzweig für die zu der Saugstrahlpumpe führenden Versorgungsleitung. Die Saugstrahlpumpe wird meist in der Wandung des Schwalltopfes befestigt und dient dazu, bei fast leerem Kraftstoffbehälter einen Mindestfüllstand an Kraftstoff in dem Schwalltopf sicherzustellen.

Nachteilig bei der bekannten Kraftstoffördereinheit ist, daß sie aufwendig zu montieren ist und daß die Versorgungsleitung zur Montage im Kraftstoffbehälter sehr lang sein muß. Eine große Länge der Versorgungsleitung führt jedoch dazu, daß die Saugstrahlpumpe nach einem Start der Kraftstoffpumpe erst mit einer Verzögerung Kraftstoff in den Schwalltopf fördert. Bei einem nahezu leeren Kraftstoffbehälter wird deshalb die Kraftstoffpumpe häufig kurzzeitig nicht mit Kraftstoff versorgt. Dies kann zu Schäden an der Brennkraftmaschine oder an einem Abgaskatalysator führen.

Der Erfindung liegt das Problem zugrunde, eine Kraftstoffördereinheit der eingangs genannten Art so zu gestalten, daß sie besonders einfach zu montieren ist und daß nach einem Start der Kraftstoffpumpe besonders schnell Kraftstoff in den Schwalltopf gefördert wird.

Dieses Problem wird erfindungsgemäß durch die Merkmale des Anspruchs 1 gelöst.

Zur Vereinfachung der Montage der erfindungsgemäßen Kraftstoffördereinheit weist das Halteteil eine Entgasungsleitung für die Kraftstoffpumpe auf.

Die Verzögerung des Betriebs der Saugstrahlpumpe nach einem Start der Kraftstoffpumpe läßt sich gemäß einer vorteilhaften Weiterbildung der Erfindung besonders klein halten, wenn die Versorgungsleitung der Saugstrahlpumpe von der Druckseite der Kraftstoffpumpe zu der Saugstrahlpumpe vertikal geführt ist. Weiterhin können sich durch diese Gestaltung keine Gasblasen in der Versorgungsleitung ansammeln und hierdurch den Betrieb der Saugstrahlpumpe beeinträchtigen.

Die Saugstrahlpumpe benötigt gemäß einer vorteilhaften Weiterbildung der Erfindung für ihren Betrieb einen besonders geringen Volumenstrom an Kraftstoff, wenn bei einer Kraftstoffpumpe mit einer Hochdruckstufe und einer Niederdruckstufe die Versorgungsleitung der Saugstrahlpumpe in Strömungsrichtung gesehen unmittelbar hinter der Hochdruckstufe angeschlossen ist.

Zur weiteren Vereinfachung der Montage der erfindungsgemäßen Kraftstoffördereinheit trägt es bei, wenn das Halteteil einteilig mit der Versorgungsleitung gefertigt ist.

Die erfindungsgemäße Kraftstoffördereinheit gestaltet sich konstruktiv besonders einfach, wenn das Halteteil zur Aufnahme der Kraftstoffpumpe topfförmig gestaltet ist. Diese Gestaltung führt zudem zu einer besonders einfachen Montage der erfindungsgemäßen Kraftstoffördereinheit.

Der Kraftstoffilter könnte beispielsweise wie bei der bekannten Kraftstoffördereinheit tütenförmig gestaltet sein. Eine Verschmutzung des Kraftstoffilters wird jedoch gemäß einer anderen vorteilhaften Weiterbildung der Erfindung besonders gering gehalten, wenn der Kraftstoffilter in einem vertikalen Bereich der Wandung des Halteteils angeordnet ist. Hierdurch können Schmutzpartikel nach einem Abschalten der Kraftstoffpumpe von dem Kraftstoffilter herabfallen.

Die erfindungsgemäße Kraftstoffördereinheit gestaltet sich besonders kompakt, wenn die Saugstrahlpumpe unmittelbar unterhalb der Kraftstoffpumpe angeordnet ist. Weiterhin können hierdurch Gasblasen sehr einfach aus der Versorgungsleitung entweichen.

Die Montage des Halteteils mit der Saugstrahlpumpe im Kraftstoffbehälter gestaltet sich gemäß einer anderen vorteilhaften Weiterbildung der Erfindung besonders einfach, wenn das Halteteil in seinem Bodenbereich eine zur Ansaugung des Kraftstoffs ausgebildete, zur Montage vor einem Durchlaß im Schwalltopf vorgesehene Öffnung aufweist.

Das Halteteil könnte beispielsweise einen Flansch zum Anschluß der Saugstrahlpumpe aufweisen. Das Halteteil läßt sich zusammen mit der Saugstrahlpumpe besonders kostengünstig aus Kunststoff in einer gemeinsamen Spritzgußform fertigen, da die Saugstrahlpumpe einteilig mit dem Halteteil gefertigt ist.

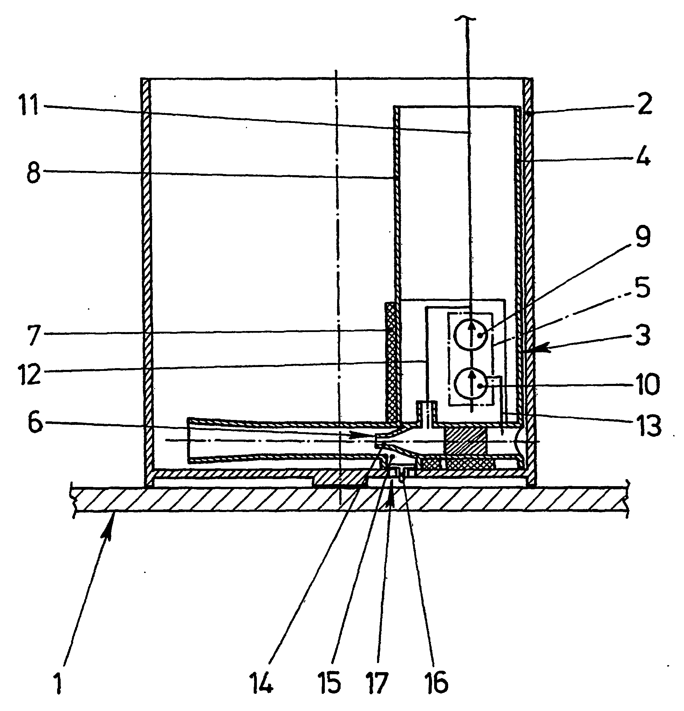

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in einer einzigen Figur eine Schnittdarstellung durch einen Bodenbereich eines Kraftstoffbehälters 1 für ein Kraftfahrzeug mit einem Schwalltopf 2 und mit einer erfindungsgemäßen Kraftstoffördereinheit 3.

Die Kraftstoffördereinheit 3 hat ein in dem Schwalltopf 2 angeordnetes Halteteil 4. Das Halteteil 4 bildet mit einer Kraftstoffpumpe 5, einer Saugstrahlpumpe 6 und einem Kraftstoffilter 7 eine bauliche Einheit. Das Halteteil 4 ist hierfür topfförmig gestaltet und einteilig mit der Saugstrahlpumpe 6 gefertigt. Der Kraftstoffilter 7 ist in einem senkrechten Bereich einer Wandung 8 des Halteteils 4 angeordnet. Die Kraftstoffpumpe 5 hat eine Hochdruckstufe 9 und eine Niederdruckstufe 10. Die Niederdruckstufe 10 saugt von dem Kraftstoffilter 7 gereinigten Kraftstoff aus dem Bodenbereich des Halteteils 4 an und fördert diesen zu der Hochdruckstufe 9. An der Hochdruckstufe 9 ist eine zu einer nicht dargestellten Brennkraftmaschine des Kraftfahrzeuges führende Vorlaufleitung 11 und eine zu der Saugstrahlpumpe 6 führende Versorgungsleitung 12 angeschlossen. Die Niederdruckstufe 10 hat eine aus dem Halteteil 4 herausgeführte Entgasungsleitung 13. Zur Verdeutlichung der Zeichnung sind die Kraftstoffpumpe 5 und die Leitungen 11 - 13 schematisch dargestellt.

Die Versorgungsleitung 12 führt unmittelbar von der Hochdruckstufe 9 der Kraftstoffpumpe 5 vertikal nach unten zu einer Düse 14 der Saugstrahlpumpe 6. Unmittelbar unterhalb der Düse 14 hat das Halteteil 4 eine Öffnung 15. Die Öffnung 15 befindet sich oberhalb eines von einem Ventil 16 verschließbaren Durchlasses 17 des Schwalltopfes 2. Bei einem Start der Kraftstoffpumpe 5 gelangt ohne wesentliche Verzögerung Kraftstoff zu der Düse 14 der Saugstrahlpumpe 6. Hierdurch wird Kraftstoff aus dem Kraftstoffbehälter 1 angesaugt und in den Schwalltopf 2 gefördert. Nach einem Abschalten der Kraftstoffpumpe 5 verschließt das Ventil 16 den Durchlaß 17 im Schwalltopf 2 und verhindert damit ein Leerlaufen des Schwalltopfes 2.

## Patentansprüche

1. Kraftstofffördereinheit für ein Kraftfahrzeug mit zumindest einer an einem Halteteil (4) befestigten Kraftstoffpumpe(5) zum Ansaugen von Kraftstoff aus einem im Bodenbereich eines Kraftstoffbehälters (1) angeordneten Schwalltopf (2) und mit einer zur Förderung von Kraftstoff aus dem Kraftstoffbehälter in den Schwalltopf vorgesehenen, über eine Versorgungsleitung (12) an der Kraftstoffpumpe angeschlossenen Saugstrahlpumpe (6), wobei das Halteteil und die Saugstrahlpumpe eine vormontierbare bauliche Einheit bilden oder die Saugstrahlpumpe einteilig mit dem Halteteil gefertigt ist, **dadurch gekennzeichnet, dass** das Halteteil (4) eine Entgasungsleitung (13) für die Kraftstoffpumpe (5) aufweist.

2. Kraftstoffördereinheit nach Anspruch 1, **dadurch gekennzeichnet, daß** die Versorgungsleitung (12) der Saugstrahlpumpe (6) von der Druckseite der Kraftstoffpumpe (5) zu der Saugstrahlpumpe (6) vertikal geführt ist.

3. Kraftstoffördereinheit nach Anspruch 1 oder 2, **dadurch gekennzeichnet, daß** bei einer Kraftstoffpumpe (5) mit einer Hochdruckstufe (9) und einer Niederdruckstufe (10) die Versorgungsleitung (12) der Saugstrahlpumpe (6) in Strömungsrichtung gesehen unmittelbar hinter der Hochdruckstufe (9) angeschlossen ist.

4. Kraftstoffördereinheit nach zumindest einem der vorhergehenden Ansprüche, **dadurch gekennzeichnet, daß** das Halteteil (4) einteilig mit der Versorgungsleitung (12) gefertigt ist.

5. Kraftstoffördereinheit nach zumindest einem der vorhergehenden Ansprüche, **dadurch gekennzeichnet, daß** das Halteteil (4) zur Aufnahme der Kraftstoffpumpe (5) topfförmig gestaltet ist.

6. Kraftstoffördereinheit nach zumindest einem der vorhergehenden Ansprüche, **dadurch gekennzeichnet, daß** der Kraftstoffilter (7) in einem vertikalen Bereich der Wandung (8) des Halteteils (4) angeordnet ist.

7. Kraftstoffördereinheit nach zumindest einem der vorhergehenden Ansprüche, **dadurch gekennzeichnet, daß** die Saugstrahlpumpe (6) unmittelbar unterhalb der Kraftstoffpumpe (5) angeordnet ist.

8. Kraftstoffördereinheit nach zumindest einem der vorhergehenden Ansprüche, **dadurch gekennzeichnet, daß** das Halteteil (4) in seinem Bodenbereich eine zur Ansaugung des Kraftstoffs ausgebildete, zur Montage vor einem Durchlaß (17) im Schwalltopf (2) vorgesehene Öffnung (15) aufweist.

## Claims

1. Fuel feed unit for a motor vehicle, with at least one fuel pump (5) fastened to a holding part (4) and intended for sucking in fuel from a baffle (2) arranged in the bottom region of a fuel tank (1), and with a suction jet pump (6) provided for feeding fuel out of the fuel tank into the baffle and connected to the fuel pump via a supply line (12), wherein the holding part and the suction jet pump form a premountable structural unit or the suction jet pump is manufactured in one piece with the holding part, **characterized in that** the holding part (4) has a degassing line (13) for the fuel pump (5).

2. Fuel feed unit according to Claim 1, **characterized in that** the supply line (12) of the suction jet pump (6) is led vertically from the delivery side of the fuel pump (5) to the suction jet pump (6).

3. Fuel feed unit according to Claim 1 or 2, **characterized in that**, in the case of a fuel pump (5) with a high-pressure stage (9) and a low-pressure stage (10), the supply line (12) of the suction jet pump (6) is connected directly downstream of the high-pressure stage (9), as seen in the direction of flow.

4. Fuel feed unit according to at least one of the preceding claims, **characterized in that** the holding part (4) is manufactured in one piece with the supply line (12).

5. Fuel feed unit according to at least one of the preceding claims, **characterized in that** the holding part (4) for receiving the fuel pump (5) is of pot-shaped design.

6. Fuel feed unit according to at least one of the preceding claims, **characterized in that** the fuel filter (7) is arranged in a vertical region of the wall (8) of the holding part (4).

7. Fuel feed unit according to at least one of the preceding claims, **characterized in that** the suction jet pump (6) is arranged directly below the fuel pump (5).

8. Fuel feed unit according to at least one of the preceding claims, **characterized in that** the holding part (4) has, in its bottom region, an orifice (15) designed for sucking in the fuel and provided in front of a passage (17) in the baffle (2) for mounting purposes.

## Revendications

1. Unité d'alimentation en carburant pour un véhicule automobile équipée d'au moins une pompe à carburant (5) fixée sur une pièce de retenue (4) pour l'aspiration de carburant dans un pot anti-désamorçage (2) disposé dans la zone de fond d'un réservoir decarburant (1) et d'une pompe à jet aspirant (6) prévue pour le transport de carburant du réservoir de carburant au pot anti-désamorçage et raccordée au moyen d'une conduite d'alimentation (12) à la pompe à carburant, la pièce de retenue et la pompe à jet aspirant formant une unité de construction prémontable ou la pompe à jet aspirant étant fabriquée d'une seule pièce avec la pièce de retenue, **caractérisée en ce que** la pièce de retenue (4) présente une conduite de dégazage (13) pour la pompe à carburant (5).

2. Unité d'alimentation en carburant selon la revendication 1, **caractérisée en ce que** la conduite d'alimentation (12) de la pompe à jet aspirant (6) est guidée verticalement du côté refoulement de la pompe à carburant (5) à la pompe à jet aspirant (6).

3. Unité d'alimentation en carburant selon la revendication 1 ou 2, **caractérisée en ce que**, dans le cas d'une pompe à carburant (5) avec un étage haute pression (9) et un étage basse pression (10), la conduite d'alimentation (12) de la pompe à jet aspirant (6) est raccordée directement derrière l'étage haute pression (9), vu dans le sens d'écoulement.

4. Unité d'alimentation en carburant selon au moins l'une quelconque des revendications précédentes, **caractérisée en ce que** la pièce de retenue (4) est fabriquée d'une seule pièce avec la conduite d'alimentation (12).

5. Unité d'alimentation en carburant selon au moins l'une quelconque des revendications précédentes, **caractérisée en ce que** la pièce de retenue (4) pour le logement de la pompe à carburant (5) est conçue en forme de pot.

6. Unité d'alimentation en carburant selon au moins l'une quelconque des revendications précédentes, **caractérisée en ce que** le filtre à carburant (7) est disposé dans une zone verticale de la paroi (8) de la pièce de retenue (4).

7. Unité d'alimentation en carburant selon au moins l'une quelconque des revendications précédentes, **caractérisée en ce que** la pompe à jet aspirant (6) est disposée directement au-dessous de la pompe à carburant (5).

8. Unité d'alimentation en carburant selon au moins l'une quelconque des revendications précédentes, **caractérisée en ce que** la pièce de retenue (4) présente dans sa zone de fond une ouverture (15) conçue pour l'aspiration du carburant et prévue pour le montage devant un passage (17) dans le pot anti-désamorçage (2).
